# EUROPÄISCHE PATENTSCHRIFT

(11) **EP 1 592 100 B1**
(45) Veröffentlichungstag und Bekanntmachung des Hinweises auf die Patenterteilung: **08.11.2006**
(21) Anmeldenummer: 05005590.4
(22) Anmeldetag: 15.03.2005
(51) Int. Cl.: H01T 4/06, H02B 1/21, H01R 9/24

(54) **Überspannungsableiter-Anordnung mit einer als Bestandteil eines Gehäuses ausführbaren Trägerplatte**
Overvoltage arresting device with a supporting plate, which could be made as a part of the housing
Dispositif dérivateur de surtensions, ayant une plaque de support, pouvant être partie du boîtier

(30) Priorität: 27.04.2004 DE 102004020584; 30.07.2004 DE 102004037083
(43) Veröffentlichungstag der Anmeldung: 02.11.2005
(73) Patentinhaber: DEHN + SÖHNE GMBH + CO KG, D-92318 Neumarkt/Opf (DE)
(72) Erfinder: Zahlmann, Peter, Dr.-Ing., 92318 Neumarkt (DE); Ehrler Jens, 92318 Neumarkt (DE); Strangfeld, Uwe, Dipl.-ing. (FH), 90471 Nürnberg (DE)
(74) Vertreter: Kruspig, Volkmar

(56) Entgegenhaltungen:
- DE-A1- 19 626 390
- DE-C1- 19 714 633
- DE-U1- 20 004 593

## Beschreibung

Die Erfindung betrifft eine Überspannungsableiter-Anordnung mit einer als Bestandteil eines Gehäuses ausführbaren Trägerplatte, wobei die Überspannungsableiter, welche insbesondere zum Schutz von Niederspannungs-Versorgungssystemen ausgelegt sind, elektrisch vorkonfektioniert auf der Trägerplatte oder im Gehäuse fixiert sowie mit externen Anschlussmitteln versehen sind, gemäß Oberbegriff des Patentanspruchs 1.

Überspannungsableiter, insbesondere so genannte Blitzstromableiter, werden vorzugsweise am Gebäudeeintritt im so genannten Hauptstrom-Versorgungssystem oder unmittelbar nach dem Zähler eingesetzt, um die nachgeordnete elektrische Installation vor den negativen Wirkungen des Blitzstoßstroms bzw. vor Überspannungen zu schützen.
Da eine der Haupteinkopplungswege dieser leitungsgebundenen Störgrößen die in das System eingeführten Leitungen selbst bilden, ist eine Installation der Schutzgeräte unmittelbar am Gebäudeeintritt erforderlich.
Bei der Installation der Schutzgeräte ist darauf zu achten, dass eine optimale Schutzwirkung erreicht werden kann, was im Übrigen in den entsprechenden Installationsvorschriften festgelegt ist.

Ganz wesentlich ist die Anschlusslänge vom zu schützenden System, z.B. der Niederspannungsversorgung über das jeweilige Schutzgerät zum Potentialausgleich. Werden hier zu lange Anschlussleitungen verwendet, entsteht ein sehr großer induktiver Spannungsabfall über diese Leitungen mit der Folge, dass die Schutzwirkung vermindert ist bzw. gänzlich verloren gehen kann.

Stromschienensysteme bzw. Sammelschienen zur Energieverteilung gehören seit längerer Zeit zum Stand der Technik und haben sich im Einsatz nicht nur aufgrund ihrer Zuverlässigkeit, sondern auch wegen der gegebenen Flexibilität im Vergleich zu anderen Installationstechniken durchgesetzt.

Derzeit ist es übliche Installationspraxis, dass Überspannungsschutzgeräte durch eine entsprechend Gehäusegestaltung auf Montageschienen bevorzugt in Hutform mechanisch adaptiert werden, wobei die elektrische Kontaktierung mittels geeigneter Zu- und Abführungsleitungen erfolgt.
Dabei ist es nicht auszuschließen, dass bei ungünstigen geometrischen Bedingungen die Anschlussleitungen die aus Schutzgründen technisch sinnvolle Länge bei weitem überschreiten.
Da bei modernen Überspannungsschutzgeräten aktuell der Trend zu immer niedrigeren Schutzpegeln und damit verbessertem Ansprechverhalten geht, kann diese an sich positive und verbesserte Geräteleistung letztendlich nicht immer in der jeweiligen Anlage umgesetzt bzw. realisiert werden. Insbesondere der bei großen Stoßstromwerten auftretende hohe induktive Spannungsabfall über den Anschlussleitungen addiert sich zum Schutzpegel der Geräte und verschlechtert daher die Schutzwirkung in der gesamten Installation.

Die oben genannte Problemstellung soll mit einer so genannten V-Verdrahtung gelöst werden. Eine derartige V-Verdrahtung zieht jedoch sehr hohe Anforderungen an die mechanische Ausführung der Leiterklemmen sowie die Betriebsstrom-Tragfähigkeit aller elektrischen Verbindungen nach sich, da bei einer derartigen Installation die Anschlussklemmen vom Betriebsstrom durchflossen werden und unter Umständen eine unzulässige Erwärmung des Überspannungsschutzgeräts im normalen Betriebsfall auftreten kann.

Das vorstehend kurz erläuterte Sammelschienensystem bietet auch für die Installation von Überspannungsschutzgeräten Vorteile. Eine denkbare direkte Montage des Überspannungsschutzgeräts auf das Schienensystem ohne externe Anschlusskabel und die sich daraus ergebende geringe Anschlussinduktivität stellt sicher, dass während des Ableitvorgangs auch bei größten Stoßstromwerten nur geringe induktive Spannungsabfälle auftreten.

Hierbei ist jedoch sicherzustellen, dass das Anschlusssystem des Überspannungsschutzgeräts auf das Schienensystem eine entsprechende Stoßstrom-Tragfähigkeit besitzt, die auf das Ableitvermögen der aktiven Schutzkomponenten abgestimmt werden muss.

Unter Beachtung dieses Sachverhalts sind technische Lösungen bekannt geworden, bei denen Überspannungsschutzgeräte, die für die Hutschienenmontage ausgelegt sind, mittels der Montage auf speziellen Adapteranordnungen für den Einsatz auf Sammelschienen ergänzt werden können.

Beispielsweise sei hierzu auf die DE 200 04 593 U1 verwiesen. Dort wird von einem Sammelschienensystem mit einer oder mehreren Stromschienen ausgegangen, die mittels eines Überspannungsableiters mit einem Bezugspotential verbindbar sind. Das dortige System ist gekennzeichnet durch eine quer auf die Stromschiene aufsetzbare Adapterbrücke, die für die Kontaktierung der Stromschiene einen stoßstromfesten Kontakt hat und welche mindestens einen Steckplatz aufweist, der zumindest einen elektrisch mit dem Kontakt der Stromschiene verbundenen Steckkontakt hat. Der Überspannungsableiter ist als Steckmodul zur entsprechenden Aufnahme in dem Steckplatz der Adapterbrücke ausgebildet und weist wenigstens einen mit dem Steckkontakt in Eingriff bringbaren Gegenkontakt sowie ferner einen Bezugspotentialanschluss auf, der mit dem Bezugspotential der Anlage verbindbar ist.

Der Nachteil dieser Lösung besteht u.a. darin, dass derartige Adapteranordnungen sehr kostenintensiv sind und allein durch den Einsatz eines Adapters der Vorteil extrem kurzer Anschlusslängen nicht erreicht oder zum Teil wieder zunichte gemacht wird.

Bezüglich des Standes der Technik sei noch auf die aus der DE 196 26 390 C2 vorbekannte elektrische Klemme mit Sammelschienenanschluss verwiesen. Diese Klemme, die insbesondere als Reihenklemme ausgeführt ist, umfasst ein Isoliergehäuse mit mindestens einer Zugfeder, wobei das Isoliergehäuse mindestens eine Leitereinführungsöffnung zum Einführen eines anzuschließenden elektrischen Leiters und mindestens eine Betätigungsöffnung zum Einführen eines Betätigungswerkzeugs zum Öffnen der Zugfeder aufweist. Die Zugfeder wiederum besitzt einen Klemmschenkel mit einer Ausnehmung zum Einführen des anzuschließenden elektrischen Leiters, einen etwa rechtwinklig zum Klemmschenkel verlaufenden Anlageschenkel und einen den Klemmschenkel und den Anlageschenkel verbindenden Rücken. Das Isoliergehäuse wiederum weist mindestens eine Sammelschienenaufnahme auf. Die Sammelschienenaufnahme ist in einer Ebene mit dem Anlageschenkel der Zugfeder ausgeführt, so dass die Sammelschiene im eingeführten Zustand direkt am Anlageschenkel der Zugfeder unter Federkraft derselben anliegt, wobei durch die Zugfeder bei eingeführtem elektrischen Leiter eine direkte oder indirekte Kontaktierung mit der Sammelschiene möglich wird.

Bei dieser Klemme mit Sammelschienenanschluss ist es allerdings notwendig, für die Montage auf ein Betätigungswerkzeug zurückzugreifen, was insbesondere beim Arbeiten unter Spannung zu Problemen führen kann.

Aus dem Vorgenannten ist es daher Aufgabe der Erfindung, eine weiterentwickelte Überspannungsableiter-Anordnung mit einer als Bestandteil eines Gehäuses ausführbaren Trägerplatte anzugeben, wobei die Überspannungsableiter, welche insbesondere zum Schutz von Niederspannungs-Versorgungssystemen ausgelegt sind, in an sich bekannter Weise elektrisch vorkonfektioniert auf der Trägerplatte oder im Gehäuse fixiert sowie mit externen Anschlussmitteln versehen sind. Die zu schaffende Überspannungsableiter-Anordnung soll für eine direkte Montage auf einem Sammelschienensystem mit mehreren Stromschienen geeignet sein, wobei die Montage leicht und ohne separates Werkzeug, d.h. sehr anwenderfreundlich, vonstatten gehen kann. Bei der anzugebenden Anordnung soll die Montage unter Spannung möglich sein, wobei die Anschlussinduktivität insgesamt reduziert und das Kontaktsystem stoßstromfest auszubilden ist.

Die Lösung der Aufgabe der Erfindung erfolgt durch die Merkmalskombination nach der Lehre des Patentanspruchs 1, wobei die Unteransprüche mindestens zweckmäßige Ausgestaltungen und Weiterbildungen darstellen.

Demnach sind zur unmittelbaren Montage auf einem Sammelschienensystem mit mehreren Stromschienen an oder in der Unterseite der Trägerplatte der Überspannungsableiter-Anordnung im Rasterabstand des Sammelschienensystems kupplungsartige Mittel zum elektrischen und mechanischen Verbinden vorgesehen, wobei die interne elektrische Verdrahtung induktivitätsarm ausgeführt ist.

Die Überspannungsableiter-Anordnung kann bereits beim Hersteller auf das anzuwendende Niederspannungssystem (TT-, TN-, IT-System) mechanisch und elektrisch vorkonfektioniert werden, wodurch Fehler bei der Installation nahezu ausgeschlossen sind.

Ein wesentlicher Vorteil der Erfindung besteht darin, dass die Kontaktierung der Überspannungsableiter-Anordnung und der in dieser befindlichen Überspannungsschutzgeräte auf der Sammelschienenanordnung sowohl elektrisch als auch mechanisch über das Kupplungssystem fixierbar ist.
Bei der anspruchsseitig beschriebenen bevorzugten Ausführungsform der Erfindung werden für dieses Kupplungssystem keine Hilfswerkzeuge benötigt. Die mechanische Fixierung und die elektrische Kontaktierung der Schutzgeräte erfolgt durch Verrasten der Kontaktelemente mit dem Stromschienensystem. Hierdurch sind sowohl kurze Montagezeiten als auch eine weitgehend unabhängig von dem Profil und der Positionierung der zu kontaktierenden Stromschiene mögliche Montagevorgänge erreichbar.

Bei einer bevorzugten Ausführungsform der Erfindung umfassen die kupplungsartigen Mittel Federelemente und mindestens eine Verrastung.

An der Trägerplattenunterseite im Bereich zwischen den Stromschienen des Sammelschienensystems sind zungenartige Vorsprünge als Störlichtbogenschutz vorgesehen, so dass auch im Falle des Auftretens und Ableitens von Stoßströmen eine Beschädigung des eigentlichen Sammelschienensystems durch Lichtbogeneinwirkung wirksam verhindert werden kann.

Die Unterseite der Trägerplatte der Überspannungsableiter-Anordnung weist im Abstand der Stromschienen des Sammelschienensystems verlaufende, nutförmige Rücksprünge oder derartige Ausnehmungen auf, wobei in diesen spezielle Federkontaktelemente befestigt sind.

In einem ersten, außenseitigen Rücksprung ist ein Federkontaktelement fixiert, welches eine erste Stromschiene klemmend an die horizontale Rücksprungfläche presst, wobei das Federkontaktelement eine offene Bogenform zum Einschieben und Aufnehmen der entsprechenden Stromschiene aufweist.

An einem zweiten, außenseitigen Rücksprung, welcher dem ersten Rücksprung gegenüberliegt, ist eine Rastnase befindlich. Diese Rastnase umgreift eine weitere Stromschiene im montierten Zustand mindestens teilweise unterseitig und hält so die gesamte Überspannungsableiter-Anordnung am Sammelschienensystem.

Zwischen dem ersten und dem zweiten außenseitigen Rücksprung sind weitere nutförmige, parallel verlaufende Rücksprünge in der Trägerplatte vorhanden. Diese nehmen die weiteren Stromschienen des Sammelschienensystems auf.

Im oder am zweiten außenseitigen Rücksprung und/oder den weiteren parallel verlaufenden Rücksprüngen sind jeweils spezielle, z.B. V-förmige Federkontaktelemente vorgesehen, welche die jeweilige Stromschiene sowohl seitlich, vertikal als auch oberflächenseitig, horizontal kontaktieren und so einen multiplen Stromübergang ermöglichen.

Die Federkontaktkraft der V-förmigen Federkontaktelemente wirkt zwischen der Trägerplatte oder Rücksprungfläche und der jeweiligen Fläche der Stromschiene, was den Kontaktübergangs-Widerstand verringert und eine sichere Kontaktierung und Befestigung auch bei Toleranzen des Gesamtsystems ermöglicht.

Die V-förmigen Federkontaktelemente weisen eine sich von einem Schenkel seitlich erstreckende, bogenförmig verlaufende federelastische Kontaktfläche auf.
Der weitere Schenkel der V-förmigen Federkontaktelemente wird mit seinem freien Ende in einer Federbefestigungsnut geführt und dort fixiert.

An der Rastnasenseite der Trägerplatte gegenüberliegend ist ein Anschlag vorgesehen. Für die Montage wird die Überspannungsableiter-Anordnung mit diesem Anschlag in gekippter bzw. Winkelstellung, bevorzugt in Kontakt mit der PE-Stromschiene gebracht, wobei diese dann bereits klemmend mit dem im dortigen Rücksprung befindlichen Federkontaktelement in Verbindung kommt. Im Anschluss wird die Gesamtanordnung weiter in Richtung des Sammelschienensystems bewegt, mit der Folge, dass nun die weiteren Federkontaktelemente mit den jeweiligen Stromschienen in Kontakt kommen. Am Ende dieses Bewegungsvorgangs erreicht die erwähnte Rastnase, die bevorzugt eine keilförmige oder schräge Gleitfläche aufweist, eine Position an der äußeren Stromschiene und gleitet an dieser entlang, bis die Rastposition erreicht wird.

Gegebenenfalls kann die Rastnase auch einen gelagerten Schenkel aufweisen, der so unter Federspannung steht, dass er die Rastposition einnimmt. In diesem Fall kann die Demontage des Geräts unter manueller Betätigung des Entriegelungshebels erfolgen, der dabei die Verrastung aufhebt.

Für den Fall einer Demontage der Überspannungsableiter-Anordnung wird ein leichtes seitliches Verschieben so lange vorgenommen, bis die Rastnase außer Kontakt mit der zugeordneten Stromschiene tritt. Durch die Kraft der Federkontaktelemente hebt sich nunmehr die Anordnung bereits leicht ab und kann dann auf umgekehrten Weg durch Kippen und Zurückschieben vom Sammelschienensystem entfernt werden. Der Einsatz irgendwelcher Werkzeuge ist hierbei nicht notwendig.

Zwischen der Anschlaginnenseite und dem Federkontaktelement ist im ersten außenseitigen Rücksprung ein elastisches Teil zum Zweck einer horizontalen Verschiebbarkeit oder zum Toleranzausgleich des Sammelschienensystems vorgesehen. Dieses elastische Teil kann als diskretes Teil angeordnet, aber auch integral mit dem dort befindlichen Federkontaktelement, d.h. als Bestandteil dieses, ausgeführt werden.

Die Federelemente weisen eine Form auf, welche beim Stromfluss im Überspannungsfall Kontaktkraft-unterstützend ein Magnetfeld aufbauen. Die Profilierung der Federelemente oder der Federkontaktelemente ermöglicht, wie bereits erwähnt, einen multiplen Stromübergang zu dem Sammelschienensystem und sichert damit die erforderliche Stoßstromfestigkeit.

Die Erfindung soll nachstehend anhand eines Ausführungsbeispiels sowie unter Zuhilfenahme von Figuren näher erläutert werden.

Hierbei zeigen:
- Fig. 1: eine prinzipielle Anordnung des Kupplungs- und Kontaktfedersystems mit Darstellung der Wirkung des Rastmechanismus und
- Fig. 2: eine installierte Überspannungsableiter-Anordnung in einem TT-System in 3+1-Schaltung.

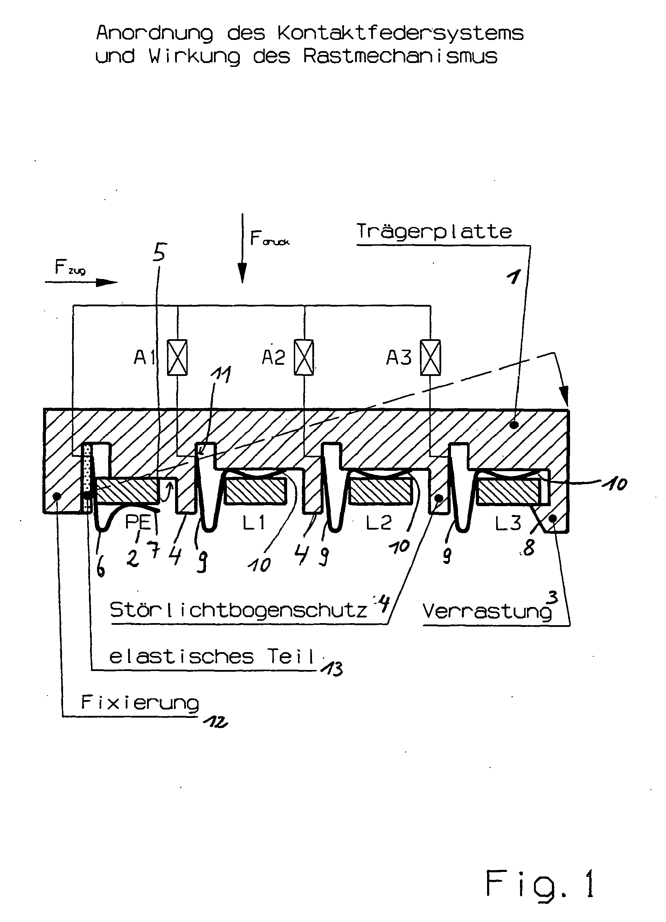

Bei der Darstellung nach Fig. 1, die einen Schnitt durch die Trägerplatte 1 zeigt, welche Bestandteil einer andeutungsweise dargestellten Überspannungsableiter-Anordnung ist, wird der Rastmechanismus und der Aufbau des Kontaktfedersystems ersichtlich.
Bei der Montage wird die zu installierende Überspannungsableiter-Anordnung in der gestrichelt angedeuteten Schräglage an der PE-Schiene 2 fixiert und so weit nach unten gedrückt, bis auf der Gegenseite die Verrastung 3 wirksam wird. Hierbei erfolgt eine allpolige, stoßstromfeste Kontaktierung über die Federelemente.

Um auch eine abweichende Profilierung oder abweichende Positionen der einzelnen Stromschienen PE, L1, L2 und L3 zu kontaktieren, wirkt der Kontaktdruck der Federelemente in horizontaler und in vertikaler Richtung. Ein Störlichtbogenschutz 4, realisiert durch eine Abschottung zwischen den Kontakten, verhindert, dass durch Sprüheffekte einzelne Störlichtbögen zwischen den Kontakten entstehen können.

Die Kontaktkraft ist bei der gezeigten Ausführungsform nicht nur von der mechanischen Kraftwirkung abhängig, sondern wird zusätzlich durch die Kraftwirkung des Magnetfelds, das von dem Blitzstrom durchflossenen Leiter ausgeht, in positiver Weise beeinflusst. Die Profilierung der Kontaktfedern kann auf vielfältige Weise realisiert werden. So bieten speziell geformte Kontaktfedern einen multiplen Stromübergang, was als Vorteil gegenüber Anordnungen mit Einzelkontakten anzusehen ist.

Als Kontaktmaterial wird ein Material mit Federeigenschaften verwendet, das gleichzeitig einen sehr guten elektrischen Leitwert aufweist, um einen geringen Kontaktübergangs-Widerstand zu erzielen. Beispielsweise sei hier auf Kupfer-Beryllium verwiesen.
Um eine Austauschbarkeit oder Positionsänderung des Überspannungsschutzgeräts zu gewährleisten, wird möglichst abbrandfreies Kontaktmaterial gewählt.

Wie aus der Fig. 1 ersichtlich, besitzt die Unterseite der Trägerplatte 1 im Abstand der Stromschienen PE(2), L1, L2 und L3 verlaufende nutförmige Rücksprünge 5 oder entsprechende Ausnehmungen, wobei in diesen die Federkontaktelemente befestigt sind.

In einem ersten außenseitigen Rücksprung 5 (im Bild linksseitig dargestellt) ist ein Federkontaktelement 6 befestigt, welches eine erste Stromschiene 2, d.h. die PE-Stromschiene klemmend, an die horizontale Rücksprungfläche presst. Das Federkontaktelement 6 weist eine offene Bogenform 7 zum leichten Einschieben der Stromschiene 2 (PE) auf.

An einem zweiten außenseitigen Rücksprung, in der Fig. 1 rechtsseitig dargestellt, ist die Verrastung 3 in Form einer Rastnase befindlich, welche eine weitere Stromschiene L3 im montierten Zustand mindestens teilweise unterseitig umgreift.
Die Verrastung 3 kann eine Keilfläche 8 und/oder schenkelseitig ein unter Federkraft stehendes Gelenk zum leichteren Aufschieben der Anordnung auf die Stromschiene L3 aufweisen.

Zwischen dem ersten und dem zweiten außenseitigen Rücksprung sind weitere nutförmige, parallel verlaufende Rücksprünge in der Trägerplatte 1 vorhanden.

Im oder am zweiten außenseitigen Rücksprung und/oder den weiteren parallel verlaufenden Rücksprüngen sind jeweils V-förmige Federkontaktelemente 9 vorgesehen, welche die jeweiligen Stromschienen L1, L2 und L3 sowohl seitlich, vertikal als auch oberflächenseitig, horizontal kontaktieren.

Wie aus der Figur ersichtlich, wirkt die Federkontaktkraft der V-förmigen Federkontaktelemente 9 zwischen der Trägerplatte 1 oder der Rücksprungfläche und der jeweiligen Fläche der Stromschiene L1, L2 bzw. L3.

Die V-förmigen Federkontaktelemente 9 weisen eine sich von einem Schenkel seitlich erstreckende, bogenförmig verlaufende federelastische Kontaktfläche 10 auf.

Der weitere Schenkel der V-förmigen Federkontaktelemente 9 ist mit seinem freien Ende in einer Federbefestigungsnut 11 geführt und fixiert.

An der der Rastnasenseite 3 der Trägerplatte 1 gegenüberliegenden Seite ist ein Anschlag im Sinne einer Fixierung 12 vorgesehen.

Zwischen der Anschlaginnenseite und dem Federkontaktelement 6 im ersten außenseitigen Rücksprung kann ein elastisches Teil 13 zum Zweck der horizontalen Verschiebbarkeit oder zum Toleranzausgleich des Sammelschienensystems vorgesehen sein.

Die elektrische Verbindung der einzelnen Überspannungsableiter A1, A2 und A3 ist gemäß Fig. 1 durch eine symbolische Verdrahtung schaltbildartig dargestellt.

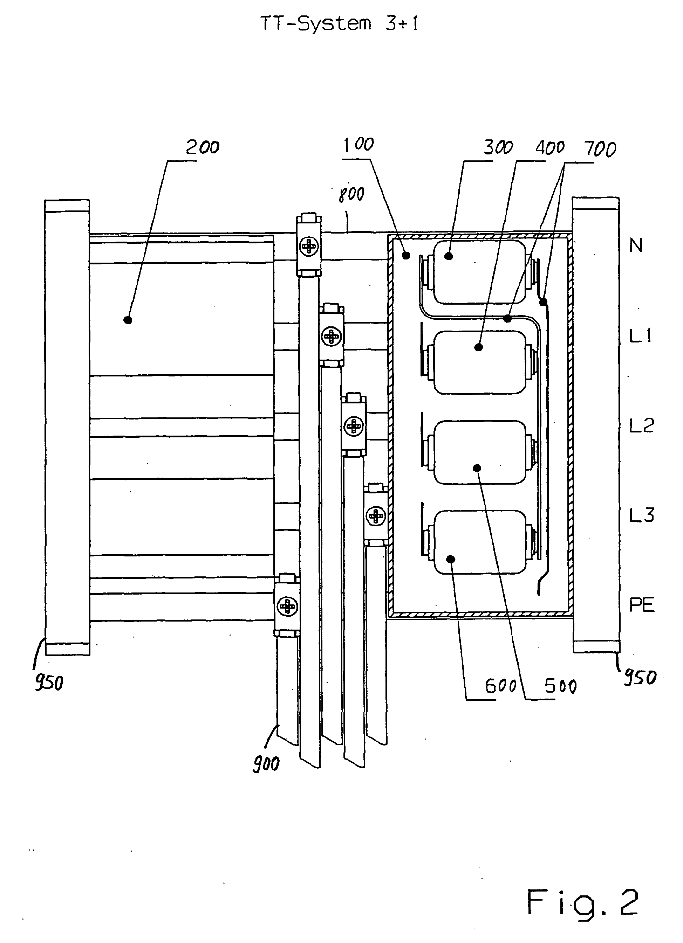

Fig. 2 zeigt eine Darstellung eines denkbaren Anwendungsfalls. Die Überspannungsableiter-Anordnung 100 ist zusammen mit einem schienenmontierbaren Installationsgerät 200, z.B. einem LS-Automat, auf einem standardisierten Schienensystem 800 montiert, das über Kabel 900 gespeist wird. Die einzelnen Schienen des Schienensystems sind beidseitig mit einem Schienenträger 950 abgeschlossen, der sowohl als Träger als auch zur mechanischen Befestigung des Schienensystems auf einer nicht dargestellten Montageplatte dient.

Bedingt durch die als separates Funktionsmodul ausgeführten aktiven Funkenstrecken 300, 400, 500 und 600 erfüllt das Gehäuse lediglich eine einfache Aufnahmefunktion.

Gleichzeitig dient die Trägerplatte als Unterteil eines zweiteiligen Gehäuses, das zur Herstellung des erforderlichen Berührungsschutzes mit einem Oberteil (Deckel) verrastbar ist.

Eine interne Verdrahtung 700 kontaktiert die einzelnen Funkenstreckenmodule und stellt die Verbindung zu den entsprechenden Steckkontaktierungen an den Sammelschienen 800 sicher.

Das Ausführungsbeispiel nach Fig. 2 zeigt eine so genannte 3+1-Schaltung, bei dem das Funkenstreckenmodul 300 zwischen dem N- und dem PE-Leiter angeordnet ist. Die Module 400, 500 und 600 werden zwischen den Leitern L1, L2, L3 und dem N-Leiter angeschlossen.
Dieses Prinzip erlaubt eine flexible Modifikation auch anderer Schaltungsvarianten, z.B. 4+0, 3+0 oder ähnliche durch eine variable Bestückung.

Insgesamt ermöglicht demnach die vorgestellte Erfindung eine Montage einer Überspannungsableiter-Anordnung mit mehreren Überspannungsableitern ohne Werkzeug durch einfaches Aufrasten, Aufschnappen und Verriegeln. Die Montage kann unter Spannung, d.h. ohne Abschalten der Anlage erfolgen, da der komplette Berührungsschutz jederzeit gegeben ist.

Zum Zwecke der Prüfung ist die Überspannungsableiter-Anordnung leicht entfernbar. Die Anschlussinduktivitäten sind außerordentlich gering, so dass die gewünschten niedrigen Ansprechspannungen erreichbar sind. Das Kontaktsystem ist stoßstromfest ausgeführt. Die vorgestellte Anordnung kann als modulares Konzept verstanden werden, wobei die Überspannungsschutzgeräte innerhalb der Gesamtanordnung wiederum ebenso leicht ausgetauscht werden können. Der Aufbau des Gehäuses mit Trägerplatte kann standardisiert, entsprechend den jeweiligen Sammelschienensystemen erfolgen.

Neben den Überspannungselementen (z.B. Funkenstrecken oder Varistormodule) können auch weitere Elemente auf der Trägerplatte angeordnet werden. Diese Elemente können Ergänzungen zum Überspannungsschutzgerät sein (z.B. Vorsicherungen, Leistungsschalter, Überwachungs- und Funktionsanzeigen), aber auch Ergänzungsfunktionen, Trigger- und Koordinationseinrichtungen (Fernmeldung, Eigendiagnostik usw.) enthalten.

### Bezugszeichenliste

- 1: Trägerplatte
- 2: PE-Leiter bzw. PE-Stromschiene
- 3: Rastnase
- 4: Störlichtbogenschutz
- 5: nutförmiger Rücksprung
- 6: Federkontaktelement im ersten, außenseitigen Rücksprung
- 7: offene Bogenform des ersten Federkontaktelements
- 8: Keilfläche der Rastnase
- 9: V-förmige Federkontaktelemente
- 10: bogenförmig verlaufende federelastische Kontaktfläche
- 11: Federbefestigungsnut
- 12: Anschlag bzw. Fixierung
- 13: elastisches Teil
- 100: Überspannungsableiter-Anordnung
- 200: Installationsgerät
- 300, 400, 500, 600: Funkenstreckenkomponenten bzw. Überspannungsableiter
- 700: interne Kontaktierung
- 800: Sammelschienensystem
- 900: Speisekabel
- 950: Schienenträger

## Patentansprüche

1. Überspannungsableiter-Anordnung mit einer als Bestandteil eines Gehäuses ausführbaren Trägerplatte, wobei die Überspannungsableiter, welche insbesondere zum Schutz von Niederspannungs-Versorgungssystemen ausgelegt sind, elektrisch vorkonfektioniert auf der Trägerplatte oder im Gehäuse fixiert sowie mit externen Anschlussmitteln versehen sind,
**dadurch gekennzeichnet, dass**
zur unmittelbaren Montage auf einem Sammelschienensystem mit mehreren Stromschienen an oder in der Unterseite der Trägerplatte im Rasterabstand des Sammelschienensystems kupplungsartige Mittel zum elektrischen und mechanischen Verbinden vorgesehen sind, wobei die interne elektrische Verdrahtung induktivitätsarm und stoßstromfest ausgeführt ist.

2. Überspannungsableiter-Anordnung nach Anspruch 1,
**dadurch gekennzeichnet, dass**
die kupplungsartigen Mittel Federelemente und mindestens eine Fixierung und Verrastung umfassen.

3. Überspannungsableiter-Anordnung nach Anspruch 1 oder 2,
**dadurch gekennzeichnet, dass**
an der Trägerplattenunterseite im Bereich zwischen den Stromschienen des Sammelschienensystems zungenartige Vorsprünge als Störlichtbogenschutz vorgesehen sind.

4. Überspannungsableiter-Anordnung nach einem der vorangegangenen Ansprüche,
**dadurch gekennzeichnet, dass**
die Unterseite der Trägerplatte im Abstand der Stromschienen des Sammelschienensystems verlaufende nutförmige Rücksprünge oder Ausnehmungen aufweist, wobei in diesen Federkontaktelemente befestigt und geführt sind.

5. Überspannungsableiter-Anordnung nach Anspruch 4,
**dadurch gekennzeichnet, dass**
in einem ersten, außenseitigen Rücksprung ein Federkontaktelement befestigt ist, welches eine erste Stromschiene klemmend an die horizontale Rücksprungfläche presst, wobei das Federkontaktelement eine offene Bogenform zum Einschieben der Stromschiene aufweist.

6. Überspannungsableiter-Anordnung nach Anspruch 5,
**dadurch gekennzeichnet, dass**
an einem zweiten, außenseitigen Rücksprung, welcher dem ersten Rücksprung gegenüberliegt, eine Rastnase befindlich ist, welche eine weitere Stromschiene im montierten Zustand mindestens teilweise unterseitig umgreift.

7. Überspannungsableiter-Anordnung nach Anspruch 5 und 6,
**dadurch gekennzeichnet, dass**
zwischen dem ersten und dem zweiten außenseitigen Rücksprung weitere nutförmige, parallel verlaufende Rücksprünge in der Trägerplatte vorhanden sind.

8. Überspannungsableiter-Anordnung nach Anspruch 6 oder 7,
**dadurch gekennzeichnet, dass**
im oder am zweiten außenseitigen Rücksprung und/oder den weiteren parallel verlaufenden Rücksprüngen jeweils V-förmige Federkontaktelemente vorgesehen sind, welche die jeweilige Stromschiene sowohl seitlich vertikal, als auch oberflächenseitig, horizontal kontaktieren.

9. Überspannungsableiter-Anordnung nach Anspruch 8,
**dadurch gekennzeichnet, dass**
die Federkontaktkraft der V-förmigen Federkontaktelemente zwischen der Trägerplatte oder Rücksprungfläche und der jeweiligen Fläche der Stromschiene wirkt.

10. Überspannungsableiter-Anordnung nach Anspruch 8 oder 9,
**dadurch gekennzeichnet, dass**
die V-förmigen Federkontaktelemente eine sich von einem Schenkel seitlich erstreckende, bogenförmig verlaufende federelastische Kontaktfläche aufweisen.

11. Überspannungsableiter-Anordnung nach Anspruch 10,
**dadurch gekennzeichnet, dass**
der weitere Schenkel der V-förmigen Federkontaktelemente mit seinem freien Ende in einer Federbefestigungsnut geführt und fixiert ist.

12. Überspannungsableiter-Anordnung nach Anspruch 6,
**dadurch gekennzeichnet, dass**
der Rastnasenseite der Trägerplatte gegenüberliegend ein Anschlag vorgesehen ist.

13. Überspannungsableiter-Anordnung nach Anspruch 12,
**dadurch gekennzeichnet, dass**
zwischen der Anschlaginnenseite und dem Federkontaktelement im ersten außenseitigen Rücksprung ein elastisches Teil zum Zweck einer horizontalen Verschiebbarkeit oder zum Toleranzausgleich des Sammelschienensystems vorgesehen ist.

14. Überspannungsableiter-Anordnung nach einem der Ansprüche 2 bis 13,
**dadurch gekennzeichnet, dass**
die Federelemente eine Form aufweisen, welche beim Stromfluss im Überspannungsfall ein Kontaktkraft- unterstützendes Magnetfeld aufbaut.

15. Überspannungsableiter-Anordnung nach einem der Ansprüche 2 bis 14,
**dadurch gekennzeichnet, dass**
die Profilierung der Federelemente oder Federkontaktelemente einen multiplen Stromübergang zu dem Sammelschienensystem ermöglicht.

16. Überspannungsableiter-Anordnung nach einem der vorangegangenen Ansprüche,
**dadurch gekennzeichnet, dass**
die Trägerplatte auf ihrer oberen Seite so ausgebildet ist, dass diese eine Abdeckung bevorzugt aufrastend aufnimmt.

## Claims

1. An overvoltage arrester arrangement with a carrier plate which may be adapted as part of a housing, with the overvoltage arresters which are designed in particular for the protection of low-voltage supply systems being electrically preassembled on the carrier plate or fixed in the housing as well as provided with external connection means,
**characterised in that**
for the immediate installation on a busbar system with several conductor bars, coupling-type means for the electrical and mechanical connection are provided at the or in the bottom surface of the carrier plate in the grid pitch of the busbar system, with the internal electrical wiring being realised with low inductivity and resistant to current surges.

2. The overvoltage arrester arrangement according to Claim 1,
**characterised in that**
the coupling-type means comprise spring elements and at least one positioning and locking means.

3. The overvoltage arrester arrangement according to Claim 1 or 2,
**characterised in that**
tongue-type protrusions are provided as protection against internal arcs at the bottom surface of the carrier plate in the area between the conductors bars of the busbar system.

4. The overvoltage arrester arrangement according to one of the previous claims,
**characterised in that**
the bottom surface of the carrier plate comprises groove-shaped recesses which extend at the spacing of the conductor bars of the busbar system, with spring contact elements being secured and guided therein.

5. The overvoltage arrester arrangement according to Claim 4,
**characterised in that**
a spring contact element is secured in a first outside recess, which urges a first conductor bar against the horizontal recess surface so as to be clamped, with the spring contact element comprising an open arc-shape for inserting the conductor bar.

6. The overvoltage arrester arrangement according to Claim 5,
**characterised in that**
a locking protrusion is disposed at a second outside recess which is arranged opposite the first recess, which at least partially encompasses a further conductor bar at its bottom surface in the assembled condition.

7. The overvoltage arrester arrangement according to Claims 5 and 6,
**characterised in that**
further groove-shaped recesses extending in parallel are provided in the carrier plate between the first and the second outside recess.

8. The overvoltage arrester arrangement according to Claim 6 or 7,
**characterised in that**
in the or at the second outside recess and/or the further parallel extending recesses, V-shaped spring contact elements each are provided which contact the respective conductor bar both laterally in a vertical direction and on its surface in a horizontal direction.

9. The overvoltage arrester arrangement according to Claim 8,
**characterised in that**
the force of the spring contact of the V-shaped spring contact elements is effective between the carrier plate or the recess surface and the respective surface of the conductor bar.

10. The overvoltage arrester arrangement according to Claim 8 or 9,
**characterised in that**
the V-shaped spring contact elements comprise an arc-shaped spring elastic contact surface which extends laterally from one leg.

11. The overvoltage arrester arrangement according to Claim 10,
**characterised in that**
the other leg of the V-shaped spring contact elements is guided and located with its free end in a spring fastening groove.

12. The overvoltage arrester arrangement according to Claim 6,
**characterised in that**
a stop is provided opposite the side of the locking protrusion of the carrier plate.

13. The overvoltage arrester arrangement according to Claim 12,
**characterised in that**
an elastic part is provided in the first outside recess between the stop inner side and the spring contact element for the purpose of a horizontal movability or for a tolerance compensation of the busbar system.

14. The overvoltage arrester arrangement according to one of Claims 2 to 13,
**characterised in that**
the spring elements comprise a shape which upon a current flow in the case of overvoltage builds a magnetic field which assists the contact force.

15. The overvoltage arrester arrangement according to one of Claims 2 to 14,
**characterised in that**
the profile of the spring elements or the spring contact elements enables a multiple current transfer to the busbar system.

16. The overvoltage arrester arrangement according to one of the previous claims,
**characterised in that**
the carrier plate on its top surface is formed in such a manner that is accommodates a cover preferably to be engaged thereon.

## Revendications

1. Dispositif dérivateur de surtensions comprenant une plaque porteuse, susceptible d'être réalisée à titre de composant d'un boîtier, les dérivateurs de surtensions, qui sont en particulier conçus pour la protection de systèmes d'alimentation à basse tension, étant électriquement préconfectionnés sur la plaque porteuse ou fixés dans le boîtier dépourvu de moyens de raccordement externes,
**caractérisé en ce que**
pour le montage direct sur un système de rails collecteurs comprenant plusieurs rails électriques sur ou dans la face inférieure de la plaque porteuse, il est prévu à une distance correspondant à la trame du système de rails collecteurs des moyens analogues à des couplages pour la liaison électrique et mécanique, le câblage électrique interne étant réalisé avec une faible inductance et une résistance aux pointes de courant.

2. Dispositif dérivateur de surtensions selon la revendication 1, **caractérisé en ce que** les moyens analogues à des couplages comprennent des éléments à ressort et au moins une fixation et un enclenchement.

3. Dispositif dérivateur de surtensions selon la revendication 1 ou 2, **caractérisé en ce que** des saillies en forme de languette sont prévues, à titre de protection à l'encontre d'arcs lumineux parasites, sur la face inférieure de la plaque dans la région entre les rails électriques du système de rails collecteurs.

4. Dispositif dérivateur de surtensions selon l'une des revendications précédentes, **caractérisé en ce que** la face inférieure de la plaque porteuse présente des ressauts ou des évidements en forme de rainures s'étendant à distance des rails électriques du système de rails collecteurs, des éléments de contact à ressort étant fixés et guidés dans ces ressauts ou évidements.

5. Dispositif dérivateur de surtensions selon la revendication 4, **caractérisé en ce qu'**un élément de contact à ressort est fixé dans un premier ressaut du côté extérieur, ledit élément de contact à ressort pressant un premier rail électrique en le serrant contre la surface horizontale du ressaut, et l'élément de contact à ressort présentant une forme en arc ouvert pour enfiler le rail électrique.

6. Dispositif dérivateur de surtensions selon la revendication 5, **caractérisé en ce qu'**il est prévu un ergot d'enclenchement sur un second ressaut du côté extérieur, à l'opposé du premier ressaut, ledit ergot d'enclenchement entourant un autre rail électrique à l'état monté au moins partiellement par le côté inférieur.

7. Dispositif dérivateur de surtensions selon la revendication 5 et 6, **caractérisé en ce que** d'autres ressauts en forme de rainures et s'étendant parallèlement sont prévus dans la plaque porteuse entre le premier et le second ressaut du côté extérieur.

8. Dispositif dérivateur de surtensions selon la revendication 6 ou 7, **caractérisé en ce que** des éléments de contact à ressort respectifs en forme de V sont prévus dans ou sur le second ressaut du côté extérieur et/ou dans ou sur les autres ressauts parallèles, lesdits éléments de contact à ressort venant en contact contre le rail électrique respectif aussi bien latéralement et verticalement que horizontalement du, côté de la surface.

9. Dispositif dérivateur de surtensions selon la revendication 8, **caractérisé en ce que** la force de contact élastique des éléments de contact à ressort en forme de V agit entre la plaque porteuse ou la surface du ressaut et la surface respective du rail électrique.

10. Dispositif dérivateur de surtensions selon la revendication 8 ou 9, **caractérisé en ce que** les éléments de contact à ressort en forme de V présentent une surface de contact élastique à la manière d'un ressort s'étendant latéralement depuis un bras et en forme d'arc.

11. Dispositif dérivateur de surtensions selon la revendication 10, **caractérisé en ce que** l'autre bras des éléments de contact à ressort en forme de V est guidé et fixé par son extrémité libre dans une gorge de fixation de ressort.

12. Dispositif dérivateur de surtensions selon la revendication 6, **caractérisé en ce qu'**une butée est prévue à l'opposé du côté de la plaque porteuse portant l'ergot d'enclenchement.

13. Dispositif dérivateur de surtensions selon la revendication 12, **caractérisé en ce qu'**une pièce élastique destinée à assurer une possibilité de translation horizontale ou pour la compensation des tolérances du système de rails collecteurs est prévue entre le côté intérieur de la butée et l'élément de contact à ressort dans le premier ressaut du côté extérieur.

14. Dispositif dérivateur de surtensions selon l'une des revendications 2 à 13, **caractérisé en ce que** les éléments élastiques ont une forme qui développe un champ magnétique assistant la force de contact lors du passage de courant dans le cas d'une surtension.

15. Dispositif dérivateur de surtensions selon l'une des revendications 2 à 14, **caractérisé en ce que** le profilage des éléments élastiques ou des éléments de contact à ressort permet une transition multiple du courant vers le système de rails collecteurs.

16. Dispositif dérivateur de surtensions selon l'une des revendications précédentes, **caractérisé en ce que** la plaque porteuse est réalisée sur sa face supérieure de telle façon que celle-ci reçoit un recouvrement, de préférence avec enclenchement.
